# EUROPEAN PATENT SPECIFICATION

(11) **EP 3 712 466 B1**
(45) Date of publication and mention of the grant of the patent: **08.01.2025**
(21) Application number: 18877273.5
(22) Date of filing: 13.11.2018
(51) Int. Cl.: F16H 57/04, F16K 11/02, F01P 7/16, F01P 11/08

(54) **THERMOSTATIC VALVE**
THERMOSTATVENTIL
VANNE THERMOSTATIQUE

(30) Priority: 13.11.2017 CN 201711116965; 13.11.2017 CN 201711115307
(43) Date of publication of application: 23.09.2020
(73) Proprietor: Zhejiang Sanhua Automotive Components Co., Ltd., Hangzhou, Zhejiang 310018 (CN)
(72) Inventor: QIU, Haoming, Zhejiang 310018 (CN); LIAO, Zhiyong, Zhejiang 310018 (CN)
(74) Representative: Maikowski & Ninnemann Patentanwälte Partnerschaft mbB
(86) International application number: PCT/CN2018/115136
(87) International publication number: WO 2019/091481

(56) References cited:
- CN-A- 102 954 198
- CN-A- 104 595 526
- CN-A- 104 847 874
- CN-A- 107 304 834
- CN-U- 202 360 800
- CN-U- 202 371 214
- US-A- 4 190 198
- US-A1- 2005 252 997
- US-A1- 2010 213 401
- US-A1- 2012 240 893

## Description

### FIELD

The present application relates to the technical field of valve bodies, and in particular to a thermostatic valve.

### BACKGROUND

Lubricating oil should be accommodated in a transmission of a vehicle, which can perform functions of lubrication and cooling, and the lubricating oil is required to be controlled at an appropriate working temperature.

When the temperature of the lubricating oil in the transmission is high, it can be cooled by an external cooling device. The cooling device includes a heat exchanger, which uses cooling water or refrigerant to cool the lubricating oil with a higher temperature, so as to achieve the purpose of keeping the lubricating oil of the transmission within a certain working temperature range. When the temperature of the lubricating oil is low, the lubricating oil does not pass through the cooling device, that is, when the lubricating oil of the transmission flows out, there are two flow paths, one flow path is through the cooling device, and the other is not through the cooling device.

At present, the switching of the above two flow paths is performed through a thermostatic valve. The thermostatic valve is provided with a thermal actuator and a spring. The thermal actuator thermally expands and contracts according to the temperature of the fluid sensed by the thermosensitive substance. During the thermal expansion, a force is transmitted to the spring, the flow path through the cooling device is opened; and during the cold contraction, the spring is reset, and the flow path through the cooling device is bypassed.

However, the above solution has the following technical problems.

There is a certain response time required from sensing temperature by the thermosensitive substance to the thermal expansion and contraction process then to applying the force on the spring, that is, the response time of the thermal actuator is long, which will cause a certain hysteresis of the temperature of the lubricating oil, and then affect the performance of the transmission. In addition, the thermal actuator including the above thermosensitive substance has a large volume.

Alternative thermostatic valves are disclosed in US2010/213401A1 or US2012/240893A1.

### SUMMARY

A thermostatic valve is provided according to the present application, to improve the sensing time of the temperature control.

A thermostatic valve is provided according to claim 1.

Compared with the technical solution with the thermal actuator, the response time of the solution using the memory spring is faster and the first valve port can be opened in time to switch the medium to another flow path in the above technical solution. When being applied to coolers and transmissions, it can improve the performance of the transmission. Moreover, compared with the thermal actuator, the combination of the memory spring and the valve core is lighter in weight and smaller in volume.

### BRIEF DESCRIPTION OF THE DRAWINGS

Figure 1 is a schematic view showing the structure of a thermostatic valve according to a first embodiment of the present application;
Figure 2 is a schematic view of the thermostatic valve in Figure 1 viewed at another angle, showing the bottom;
Figure 3 is a sectional view of the thermostatic valve in Figure 1, with a second valve port closed and a first valve port opened;
Figure 4 is a schematic view of the thermostatic valve in Figure 3 after the valve core is moved to the right, with the first valve port closed and the second valve port opened;
Figure 5 is a schematic view of the valve body in Figure 3;
Figure 6 is a sectional view showing the structure of a thermostatic valve according to a second embodiment of the present application, with a second valve port closed and a first valve port opened;
Figure 7 is a schematic view of the thermostatic valve in Figure 6 after the valve core is moved to the right, with the first valve port closed and the second valve port opened;
Figure 8 is a sectional view showing the structure of a thermostatic valve in an initial state according to a third example not according to the claims, with a first valve port having a preset opening degree and a second valve port having a preset opening degree;
Figure 9 is a schematic view of the thermostatic valve in Figure 8 after the temperature rises to a specified value and a memory spring is deformed, with the first valve port closed and the second valve port opened;
Figure 10 is a schematic view of the thermostatic valve in Figure 9 after the temperature drops below a specified value and the memory spring loses characteristics, with the first valve port opened and the second valve port closed;
Figure 11 is a schematic view showing the structure of a valve core in Figure 8;
Figure 12 is a sectional view showing the structure of a thermostatic valve in an initial state according to a forth example not according to the claims, with a first valve port having a preset opening degree and a second valve port having a preset opening degree;
Figure 13 is a schematic view of the thermostatic valve in Figure 12 after the temperature rises to a specified value and a memory spring is deformed, with the first valve port closed and the second valve port opened;
Figure 14 is a schematic view of the thermostatic valve in Figure 13 after the temperature drops below a specified value and the memory spring loses characteristics, with the first valve port opened and the second valve port closed;
Figure 15 is a schematic view showing the structure of an end cover in Figure 12;
Figure 16 is a sectional view showing the structure of a thermostatic valve in an initial state according to a fifth example not according to the claims, with a first valve port having a preset opening degree and a second valve port having a preset opening degree;
Figure 17 is a schematic view of the thermostatic valve in Figure 16 after the temperature rises to a specified value and a memory spring is deformed, with the first valve port closed and the second valve port opened;
Figure 18 is a schematic view of the thermostatic valve in Figure 17 after the temperature drops below a specified value and the memory spring loses characteristics, with the first valve port opened and the second valve port closed;
Figure 19 is a sectional view showing the structure of a thermostatic valve according to a sixth example not according to the claims, with a first valve port closed and a second valve port opened;
Figure 20 is a schematic view showing the structure of a valve core in Figure 19;
Figure 21 is a sectional view showing the structure of a thermostatic valve according to a seventh example not according to the claims, with a first valve port closed and a second valve port opened;
Figure 22 is a sectional view showing the structure of a thermostatic valve according to an eighth example not according to the claims, with a first valve port opened and a second valve port closed;
Figure 23 is a schematic view of the thermostatic valve in Figure 22 after the temperature rises and a memory spring is deformed, with the first valve port closed and the second valve port opened;
Figure 24 is a schematic view showing an end cover, a valve core, a return spring, and the memory spring in Figure 22 after installation;
Figure 25 is a schematic perspective view of Figure 24;
Figure 26 is a sectional view showing the structure of a thermostatic valve according to a ninth example not according to the claims, with a first valve port B closed and a second valve port A opened;
Figure 27 is a sectional view showing the structure of a thermostatic valve according to a tenth example not according to the claims, with a first valve port opened and a second valve port closed;
Figure 28 is a schematic view of the thermostatic valve in Figure 27 after a valve core is moved to the right, with the second valve port opened and the first valve port closed, according to an example not according to the claims; and
Figure 29 is a schematic view of the valve core in Figure 27 according to an example not according to the claims.

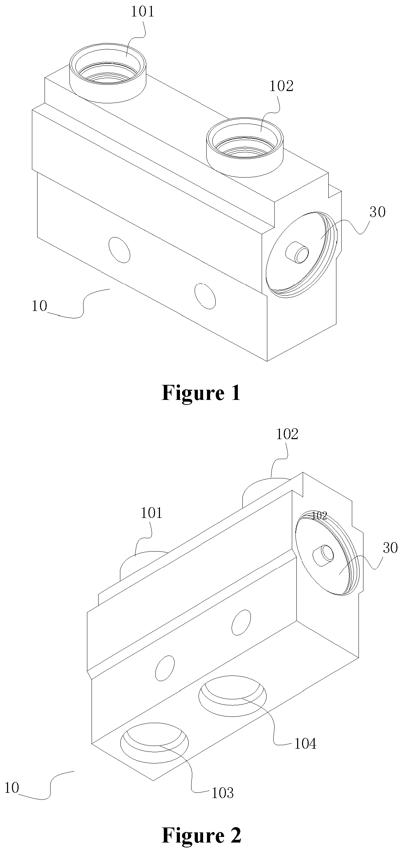

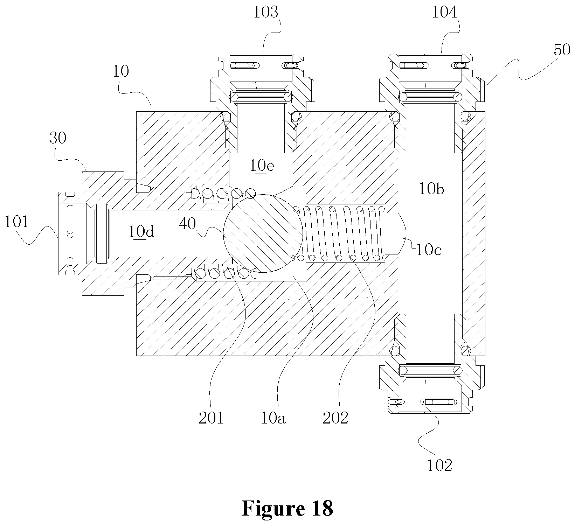

**Reference Numerals in Figures 1 to 29:**

| | | | |
|---|---|---|---|
| 10 | valve body, | 10a | valve cavity, |
| 10b | linear passage, | 10c | small hole, |
| 10d | outlet passage, | 10e | inlet passage, |
| B | first valve port, | A | second valve port; |
| 101 | first outlet, | 102 | second inlet, |
| 103 | first inlet, | 104 | second outlet, |
| 201 | memory spring, | 202 | return spring, |
| 30 | end cover, | 301 | first stepped surface, |
| 302 | second stepped surface, | | |
| 40 | valve core, | 401 | main body portion, |
| 401a | end protruding platform, | 402 | sleeve portion, |
| 402a | guiding inlet, | 402b | opening, |
| 402c | notch, | 403 | guide rod, |
| 405 | sealing plate, | 405a | recessed hole, |
| 404 | spherical portion, | 40' | sealing piece, |
| 50 | external connector, | 60 | valve stem. |

### DETAILED DESCRIPTION

In order to make those skilled in the art to better understand the technical solutions of the present application, the present application is further described in detail below in conjunction with the drawings and specific embodiments.

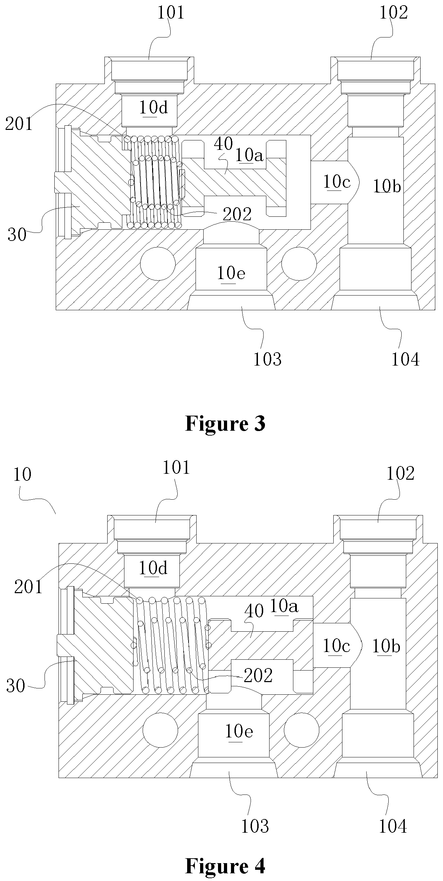

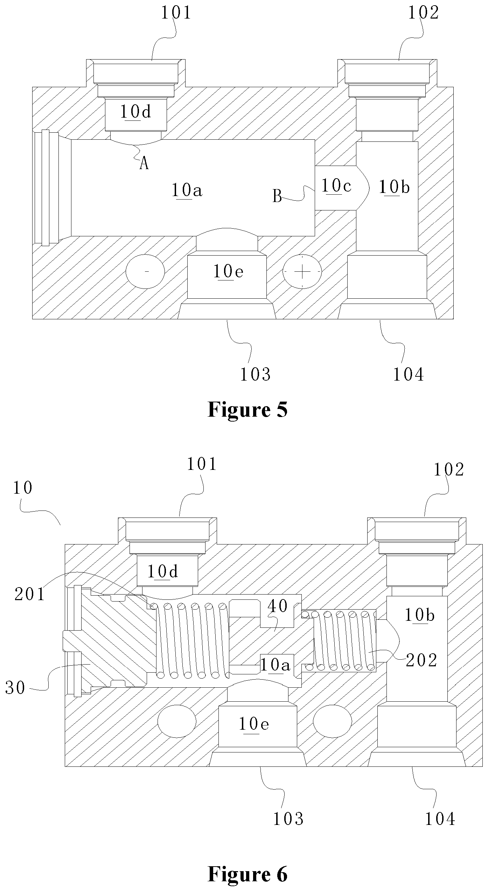

Referring to Figures 1 to 4, Figure 1 is a schematic view showing the structure of a thermostatic valve according to a first embodiment of the present application; Figure 2 is a schematic view of the thermostatic valve in Figure 1 viewed at another angle, showing the bottom; Figure 3 is a sectional view of the thermostatic valve in Figure 1, with a second valve port closed and a first valve port opened; Figure 4 is a schematic view of the thermostatic valve in Figure 3 after a valve core is moved to the right, with the first valve port closed and the second valve port opened; and Figure 5 is a schematic view of a valve body in Figure 3.

The thermostatic valve according to the first embodiment includes a valve body 10, and a valve cavity 10a is formed inside the valve body. Specifically, in this embodiment, as shown in Figures 3 and 5, the valve cavity 10a penetrates one end surface of the valve body 10 from left to right, to form the valve cavity 10a with an end port at the left end, and an end cover 30 is used to block the end port. A valve core 40 is provided in the valve cavity 10a, and the valve core 40 can move axially along the valve cavity 10a. The axial direction here refers to an extending direction of the valve cavity 10a from one end to the other end, which is the left-right direction shown in Figures 3 and 4. When the valve body 10 is in the rectangular parallelepiped shape as shown in Figures 1 and 2, the axial direction here also refers to the length direction of the valve body 10 or the length direction of the valve cavity 10a.

The thermostatic valve has a first outlet 101, a second inlet 102 and a second outlet 104, and also has a first inlet 103 in communication with the valve cavity 10a. In this embodiment, the above inlets and outlets are integrally formed in an outer wall of the valve body 10, which can be connected to external members. In Figure 5, a first valve port B for communicating the valve cavity 10a with the second outlet 104 and a second valve port A for communicating the valve cavity 10a with the first outlet 101 are also provided in the valve body 10. The second valve port A is specifically provided in a side cavity wall of the valve cavity 10a, and an outlet passage 10d is formed between the second valve port A and the first outlet 101. The first valve port B is formed in an end cavity wall of the valve cavity 10a, that is, the cavity wall at the right end in Figure 3, and the left end is the end port blocked by the end cover 30. The first valve port B is in communication with the second outlet 104 through the second outlet passage, and the second outlet passage in Figure 3 includes a small hole 10c, and a linear passage 10b between the second inlet 102 and the second outlet 104.

The thermostatic valve according to all the embodiments herein can be used between a transmission and a cooler. The medium flowing inside the thermostatic valve is lubricating oil. That is, the first outlet 101 of the thermostatic valve is in communication with an inlet of the cooler, the second inlet 102 is in communication with an outlet of the cooler, the second outlet 104 is in communication with an inlet of the transmission, and the first inlet 103 is in communication with an outlet of the transmission. After flowing out of the transmission, the lubricating oil enters the thermostatic valve through the first inlet 103, and then the lubricating oil flows directly back to the transmission through the first port B and the second outlet 104, or the lubricating oil enters the cooler through the second port A and the first outlet 101 to be cooled, and returns to the transmission through the second inlet 102 and the second outlet 104. The following main working process is also exemplified by this application. However, it can be understood that the transmission and the cooler are only a typical application of the thermostatic valve in the present application. Obviously, besides the transmission, the thermostatic valve can also be applied to other applications that are required to control temperature to adjust the medium flow path.

Specifically, the valve core 40 in this embodiment is movable to switch the opening and closing of the first valve port B and the second valve port A. As shown in Figure 3, the valve core 40 can move right to block the first valve port B and open the second valve port A; and the valve core 40 can move left to block the second valve port A and open the first valve port B. The opening and closing of the first valve port B and the second valve port A realize the switching of the two flow paths; and when the thermostatic valve is applied to the transmission and the cooler, the lubricating oil can be cooled by passing through the cooler or can directly return to the transmission without cooling.

The movement of the valve core 40 is mainly achieved by a return spring 202 and a memory spring 201 provided in the valve cavity 10a. The memory spring 201 is a spring made of a shape memory alloy material (SMA: Shape Memory Alloy). The return spring 202 can provide a return force that causes the valve core 40 to open the first valve port B. In this embodiment, the return spring 202 is a tension spring, that is, it provides a pulling force. The direction of the pulling force of the valve core 40 in Figure 3 is leftward. The leftward spring can play the role of connecting the valve core 40. The valve core 40 can be processed into a structure with an I-shaped axial cross section as shown in the figure, to reduce weight and facilitate movement. When the temperature rises to a specified value, the elastic characteristic of the memory spring 201 is activated, and the memory spring 201 has an elastic potential energy to provide the elastic force. The direction of the elastic force is opposite to the direction of the pulling force to drive the valve core 40 to move against the return force. The specified value corresponding to the elasticity of the memory spring 201 being activated can be determined by selecting materials according to the requirement, so that the memory spring 201 can be deformed due to increased temperature at the ambient temperature where the path switching is required.

The following working principle of this embodiment is described as follows.

In the working state shown in Figure 3, the medium (for example, the above lubricating oil of the transmission) flows from the first inlet 103 into the valve cavity 10a of the thermostatic valve. Since the second valve port A is closed and the first valve port B is opened, the medium flows to the small hole 10c, the linear passage 10b, and the second outlet 104 through the first valve port B, and returns to the transmission.

When the medium temperature rises to a specified value, the thermostatic valve is in the working state shown in Figure 4, the elastic characteristic of the memory spring 201 is activated, and the elastic force generated is greater than the return force of the return spring 202. At this time, the valve core 40 moves toward the first valve port B under a difference between forces applied by the memory spring 201 and the return spring 202. The valve core 40 can block the first valve port B and open the second valve port A. After the medium flows in from the first inlet 103, the medium enters the cooler through the second valve port A, the outlet passage 10d, and the first outlet 101, to be cooled. The cooled lubricating oil flows out of the cooler, and then enters the valve cavity 10a from the second inlet 102, and re-enters the transmission through the linear passage 10b and the second outlet 104.

After the temperature of the medium drops below a specified value, the elastic characteristic of the memory spring 201 fails, the elastic force decreases and then disappears, and the valve core 40 moves away from the first valve port B under the return force of the return spring 202, and at this time, the first valve port B is opened, the second valve port A is closed and the valve core 40 returns to the state shown in Figure 3. It can be seen that the memory spring 201 according to this embodiment serves as a thermal actuator that drives the action of the valve core 40, and the structure is simple.

In this embodiment, the memory spring 201 and the return spring 202 are both provided between the end cover 30 and the valve core 40. Obviously, the arrangement manner is not limited to this.

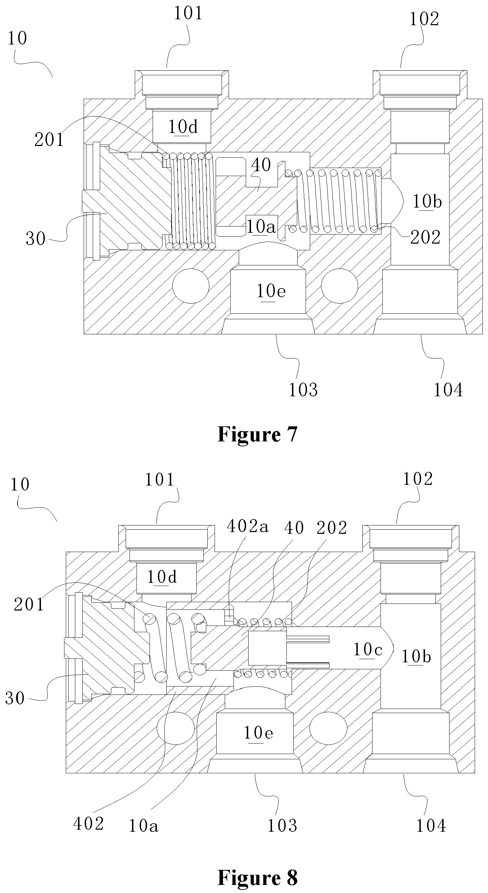

Referring to Figures 6 to 7, Figure 6 is a sectional view showing the structure of a thermostatic valve according to a second embodiment of the present application, with the second valve port A closed and the first valve port B opened; and Figure 7 is a schematic view of the thermostatic valve in Figure 6 after the valve core is moved to the right, with the first valve port B closed and the second valve port A opened.

This embodiment is basically the same as the first embodiment. The memory spring 201 is located between the end cover 30 and the valve core 40. The memory spring 201 has one end in contact with another end of the valve core 40, and another end in contact with the end cover 30. A stepped hole is formed in the valve body 10, and the large hole of the stepped hole is the valve cavity 10a, and the first valve port B is formed at a junction of the small hole 10c and the large hole. The difference is that, in this embodiment, the return spring 202 in Figure 6 provides a resilience force instead of a pulling force, that is, the return spring 202 and the memory spring 201 can be respectively provided at two ends of the valve core 40. One end of the return spring 202 is in contact with one end of the valve core 40, and the other end of the return spring 202 abuts against the valve body 10 to provide the valve core 40 with a force in the opposite direction.

Specifically, the return spring 202 is provided in the small hole 10c, and a step is provided in the small hole 10c. The return spring 202 is pre-compressed between the valve core 40 and the step, to provide the resilience force for driving the valve core 40 away from the first valve port B, and the direction of the resilience force is opposite to the direction of the elastic force of the memory spring 201 applied on the valve core 40. At this time, the right end, facing the return spring 202, of the valve core 40 may be provided with a protrusion to be inserted into the return spring 202, to assemble the return spring 202 and also play a role of positioning and guiding the valve core 40.

Of course, the step may not be provided in the small hole 10c, and the right end of the return spring 202 may directly abut against the inner wall of the linear passage 10b, or a recessed hole is provided in the inner wall of the linear passage 10b, and the right end of the return spring 202 directly abuts against the recessed hole. The return spring 202 can also be pre-compressed between the valve core 40 and the cavity wall of the right end portion of the valve cavity 10a.

In addition, in the first and second embodiments, the right end of the valve core 40 is its sealing portion, which can block the first valve port B when the valve core 40 moves to the right; and the memory spring 201 serves as the sealing portion of the second valve port A. When the temperature of the medium is low, the memory spring 201 is in a compressed and tight state and in correspondence to the position of the second valve port A, to block the second valve port A. When the memory spring 201 is heated up and expands, the memory spring 201 deforms and stretches, the diameter of the memory spring 201 decreases, and a gap appears between the second valve port A and the memory spring 201, and a notch may also appear between several spring coils of the memory spring 201, and the medium in the valve cavity 10a may flow through the gap and the notch to the second valve port A and then flow out. At this time, the second valve port A is opened. It can be seen that, with this arrangement, the memory spring 201 not only serves as a thermal actuator that drives the movement of the valve core 40, but also serves as a sealing portion, thereby simplifying the structure of the valve core 40.

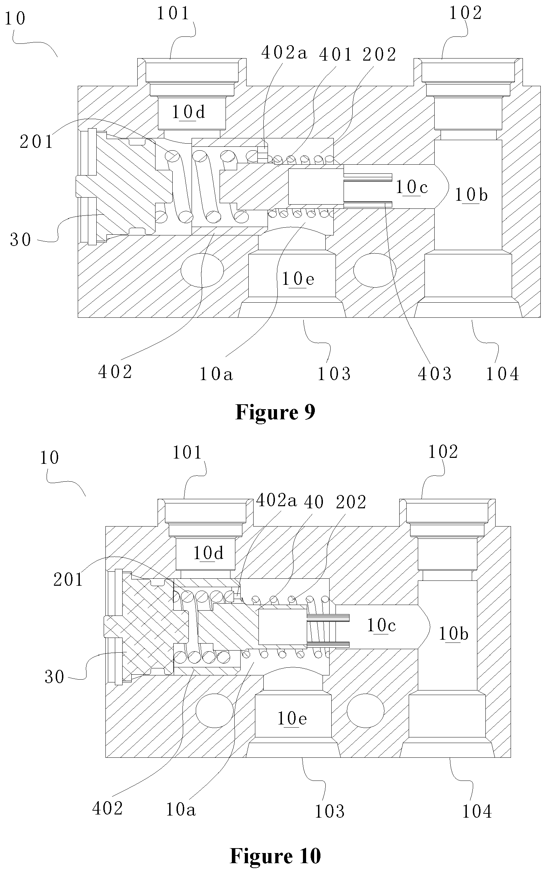

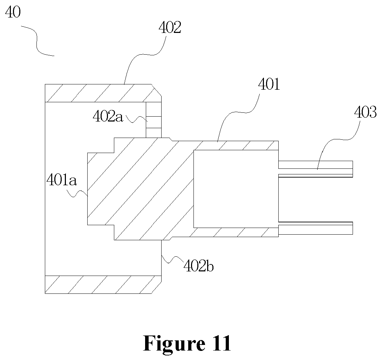

Of course, the manner of blocking the second valve port A is not limited to that. Referring to Figures 8 to 11, Figure 8 is a sectional view showing the structure of a thermostatic valve in an initial state according to a third example not according to the claims, with a first valve port B having a preset opening degree and a second valve port A having a preset opening degree; Figure 9 is a schematic view of the thermostatic valve in Figure 8 after the temperature rises to a specified value and the memory spring 201 is deformed, with the first valve port B closed and the second valve port A opened; Figure 10 is a schematic view of the thermostatic valve in Figure 9 after the temperature drops below a specified value and the memory spring 201 loses characteristics, with the first valve port B opened and the second valve port A closed; and Figure 11 is a schematic view showing the structure of the valve core 40 in Figure 8.

In this example, the second valve port A is also provided in the side cavity wall of the valve cavity 10a, and the first valve port B is provided in the end cavity wall of the valve cavity 10a. In comparison, the valve core 40 in this example is additionally provided with a sleeve portion 402, and the memory spring 201 is provided in the sleeve portion 402 and located between the end cover 30 and the valve core 40. At this time, the right end of the valve core 40 forms a first sealing portion for blocking the first valve port B, and the sleeve portion 402 on the valve core 40 forms a second sealing portion for blocking the second valve port A. Specifically, the outer wall of the sleeve portion 402 can slide along the side cavity wall of the valve cavity 10a, to block or open the second valve port A. At this time, the memory spring 201 only serves as a thermal actuator that drives the valve core 40 to move according to temperature changes.

To facilitate the assembly of the memory spring 201, a protruding platform is provided on the inner end surface of the end cover 30 facing the valve core 40, and one end of the memory spring 201 is sleeved on the protruding platform. The valve core 40 includes a main body portion 401 extending in the axial direction and a sleeve portion 402 sleeved outside a part of the main body portion 401. The left end of the main body portion 401 extends into the sleeve portion 402. Another end of the memory spring 201 is sleeved on the left end of the main body portion 401. The sleeve portion 402 and the main body portion 401 of the valve core 40 may be separately processed or integrally formed, as shown in Figure 11.

In the third example, same as the first and second embodiments, a stepped hole is also formed in the valve body 10. The large hole of the stepped hole is the valve cavity 10a, and the first valve port B is formed at the junction of the large hole of the stepped hole and the small hole 10c. In addition, the right end of the main body portion 401 of the valve core 40 serves as a first sealing portion and is also connected to a guide rod 403. The guide rod 403 and the main body portion 401 may be individually formed or integrally formed. The guide rod 403 can be inserted into the small hole 10c to guide the movement of the valve core 40. The feature that the guide rod 403 is provided on the valve core 40 to be inserted into the small hole 10c for guiding is also applicable to other embodiments. As shown in Figure 11, the end of the valve core 40 facing the first valve port B may be hollow, to reduce weight and save material.

In the second embodiment, as a sealing portion for sealing the first valve port B, the right end of the valve core 40 is provided with a protruding platform to be inserted into the return spring 202. The return spring 202 is located in the small hole 10c, and can also play a certain guiding role; however, in the third example, the guide rod 403 is directly inserted into the small hole 10c for guiding, and the guiding effect is better. Since the sleeve portion 402 is provided, the step is not required to be processed on the hole wall of the small hole 10c to install the return spring 202. The return spring 202 can be arrange between the sleeve portion 402 and the end cavity wall of the valve cavity 10a, as shown in Figure 8.

In addition, in the third example, since the valve core 40 is provided with the sleeve portion 402, the sleeve portion 402 is in sliding fit with the side cavity wall of the valve cavity 10a, and an opening 402b is provided at the bottom of the sleeve portion 402 close to the first inlet 103, as shown in Figure 11 (that is, below the bottom in Figure 8), so that the medium can flow into the inner cavity of the sleeve portion 402 and thus flows to the second valve port A. In order to facilitate the medium to come into contact with the memory spring 201 faster and more, a guiding inlet 402a penetrating the bottom is further provided at the bottom of the sleeve portion 402 away from the first inlet 103 (above the bottom in Figure 8) in Figure 8, and as a flow guiding passage, the guiding inlet 402 is configured to communicate the valve cavity 10a with the inner cavity of the sleeve portion 402. The number of the guiding inlet 402a may be one or more.

It should be noted that, in the third example, an end protruding platform 401a is provided at the left end of the main body portion 401 of the valve core 40. In the initial state, that is when leaving factory, one end of the memory spring 201 is surrounded around the end protruding platform 401a, abuts against the stepped surface formed by the end protruding platform 401a and the main body portion 401, which is the initial position of the end of the memory spring 201. As shown in Figure 8, the first valve port B is not fully opened and has a preset opening degree, the second valve port A also has an initial preset opening degree, so that the thermostatic valve has the characteristic of the second valve port A being always open in the initial state, thereby facilitating filling the lubricating oil into the transmission and at the same time filling the lubricating oil into the cooler in the initial state, to meet the requirement of the initial filling. That is, both valve ports are opened.

After that, when the temperature of the lubricating oil rises to a specified value, the memory spring 201 deforms and expands to a certain extent, thereby detaching from the end protruding platform 401a and surrounding the main body portion 401 with a greater outer diameter. The memory spring 201 is then switched to a normal working state, and always surrounds the main body portion 401, as shown in Figure 9, and is deformed to abut against the bottom position of the sleeve portion 402. This position is the working position. At this time, the first valve port B is kept closed under the elastic force of the memory spring 201. The initial position and working position of the end of the memory spring 201 described in the present application refer to the relative position of the end and the valve body 10 (the cavity wall of the valve cavity or the end cover 30 of the valve body 10) or the relative position of the end and the valve core 40, and do not change as the valve core 40 moves.

When the temperature is lower than a specified value, the memory spring 201 loses its characteristic. Under the action of the return force of the return spring 202, the valve core 40 moves and compresses the memory spring 201. The distance between the bottom of the sleeve portion 402 and the end cover 30 is greater than the distance between the protruding platform of the main body portion 401 and the end cover 30, thus when the memory spring 201 detaches from the protruding platform of the main body portion 401 and surrounds the main body portion 401, the valve core 40 is closer to the end cover 30 under the action of the return spring 202, and the sleeve portion 402 will block the second valve port A, eliminating the initial preset opening degree, as shown in Figure 10.

It can be seen that a setting method is provided according to this example, that is, a two-stage step (a stepped surface between the end protruding platform 401a and the main body portion 401 is a first stepped surface, and the bottom of the sleeve portion 402 is a second stepped surface) is provided on the valve core 40, and the initial position and the working position are respectively formed by the first stepped surface and second stepped surface. When the memory spring 201 is at the initial position, the first valve port B has a preset opening degree, and the distance between the valve core 40 and the first valve port B when the memory spring 201 is at the initial position is smaller than the distance between the valve core 40 and the first valve port B when the memory spring 201 is at the working position and the temperature is below a specified value.

When the valve core 40 is at a certain position, the distance between the initial position and the end cover 40 is smaller than the distance between the working position and the end cover 40. In this way, when the memory spring 201 is in any temperature environment (not affected by the specified value), the first valve port B maintains in a closed state, and the second valve port A has a preset opening degree (if the second valve port A is not provided, the medium can flow directly to the first outlet 104). After at the working position, the distance between the end cover 30 and the valve core 40 becomes longer, so that the return spring 202 can drive the valve core 40 to compress the memory spring 202 by more distance, thereby opening the first valve port B and closing the second valve port A.

It can be understood that the setting of the initial position and the working position is to adjust the distance between the valve core 40 and the end cover 30 or the valve core 40 and the valve body 10, so that the distance between the two ends of the memory spring 201 can be compressed to different degrees at the two working positions, thereby achieving the opening and closing of the first valve port B. Therefore, the initial position and the working position can also be set at the valve core 40 or the valve body 10, which can also be achieved by the two-stage step method, and both the valve core 40 and the valve body 10 can be set with the initial position and the working position, or both the valve core 40 and the end cover 30 can be set with the initial position and the working position, so that both ends of the memory spring 201 can abut against the initial position or the working position.

In the above example, the first outlet 101, the second inlet 102, the second outlet 104, and the first inlet 103 are all provided in the side wall of the valve body 10, the first valve port B is provided in the end cavity wall of the valve cavity 10a, and the second valve port A is provided in the side cavity wall of the valve cavity 10a. The second outlet 104 and the second inlet 102 are opposite to each other, and a linear passage 10b (a linear passage 10b is also formed in the other embodiments and examples described below) is formed between the second outlet 104 and the second inlet 102. The first valve port B is in communication with the linear passage 10b, which is specifically in communication with the linear passage 10b through the small hole 10c of the stepped hole in the above embodiment. In this way, the first inlet 103 and the second inlet 102 can share a passage to the second outlet 104, thereby simplifying the structure and facilitating processing. Of course, other setting methods can also be adopted.

The inlets, outlets, and valve ports of the thermostatic valve can also be set by other ways.

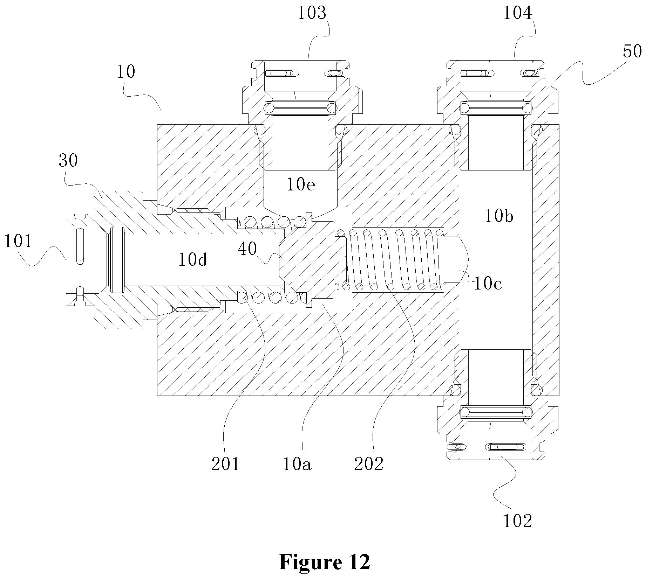

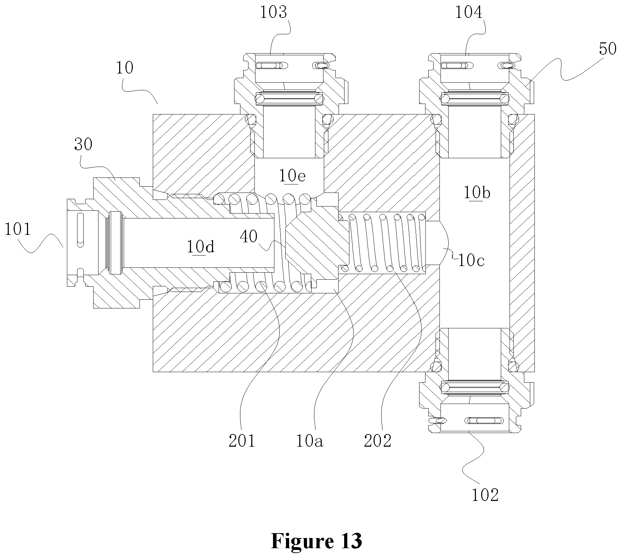

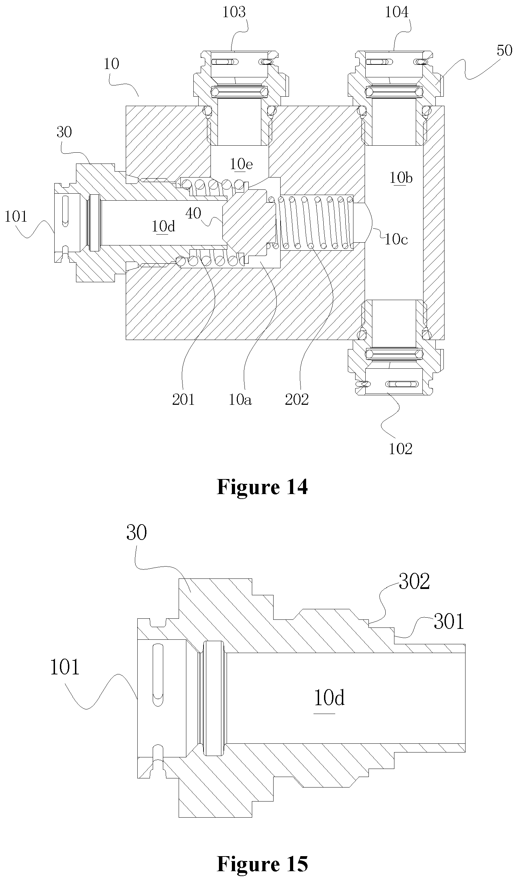

Referring to Figures 12 to 15, Figure 12 is a sectional view showing the structure of a thermostatic valve in an initial state according to a forth example of the present application, with a first valve port B having a preset opening degree and a second valve port A having a preset opening degree; Figure 13 is a schematic view of the thermostatic valve in Figure 12 after the temperature rises to a specified value and the memory spring 201 is deformed, with the first valve port B closed and the second valve port A opened; Figure 14 is a schematic view of the thermostatic valve in Figure 13 after the temperature drops below a specified value and the memory spring 201 loses characteristics, with the first valve port B opened and the second valve port A closed; and Figure 15 is a schematic view showing the structure of the end cover 30 in Figure 12.

In this example, the end cover 30 actually not only covers the end port position of the valve body 10, but also becomes a seat switching structure to function as a connector for communicating with the outside, specifically for communicating with the cooler in this example. The switching seat is provided with a passage penetrating the inside and outside of the switching seat, and an outlet passage 10d is formed by the passage. The internal end port of the outlet passage 10d is the second valve port A, and the external end port is the first outlet 101. At this time, the second valve port A and the first valve port B are distributed along the axial direction of the valve cavity 10a. In this way, during the movement of the valve core 40, one end of the valve core 40 may be a first sealing portion for blocking the first valve port B, and the other end is a second sealing portion for blocking the second valve port A. In this way, the operation is more convenient for the valve core 40 to block the first valve port B and the second valve port A, and the valve core 40 is easier to process. In this example, in addition to the first outlet 101 of the thermostatic valve formed by the end cover 30 with the seat switching structure, the second outlet 104, the second inlet 102, and the first inlet 103 are also formed by connectors 50 externally connected to the valve body 10. In the first embodiment to third example, the outlets and inlets in communication with the outside are each directly formed as a connector-like structure on the valve body 10, and both solutions are applicable to all embodiments and examples of the present solution.

In addition, in the fourth example, the setting of the initial preset opening degree is also performed. As can be understood with reference to Figure 15, a two-stage step is provided at the inner end, toward the valve core 40, of the switching seat, and the outer diameter of the first step is smaller than the outer diameter of the second step, forming a first step surface 301 and a second step surface 302 that both face the valve core 40, the first step surface 301 is the initial position and the second step surface 302 is the working position. The distance between the valve core 40 and the initial position is smaller than the distance between the valve core 40 and the working position. In this way, in the initial state of leaving factory, the left end of the memory spring 201 is surrounded around the first step of the valve core 40 and abuts against the first step surface 301. At this time, the first valve port B is closed and the second valve port A has the initial preset opening degree, as shown in Figure 12, so that the thermostatic valve has the characteristic of the second valve port A being always open in the initial state, thereby facilitating filling the lubricating oil into the transmission in the initial state and at the same time filling the lubricating oil into the cooler, to meet the requirement of the initial filling. Of course, when the second valve port A is not provided, the memory spring 201 abuts against the initial position, the first valve port B is closed, and the lubricating oil can directly flow into the cooler through the first outlet 101.

After that, when the temperature of the lubricating oil rises to a specified value, the memory spring 201 deforms and expands to a certain extent, thereby detaching from the first step and surrounding around the second step. After that, the memory spring 201 is switched to the normal working position and will be always surrounded around the second step, as shown in Figure 13. The memory spring 201 is also deformed to abut against the second step surface 302. At this time, the first valve port B is kept closed under the elastic force of the memory spring 201.

When the temperature is lower than a specified value, the memory spring 201 loses its characteristic. Under the action of the return force of the return spring 202, the valve core 40 moves and compresses the memory spring 201. The distance between the second step surface 302 and the valve core 40 is greater than the distance between the first step surface 301 and the valve core 40, thus when the memory spring 201 is detached from the first step and surrounded around the second step, the valve core 40 will be closer to the end cover 30 under the action of the return spring 202, and the left end portion of the valve core 40 will block the second valve port A, eliminating the initial preset opening degree, and the first valve port B is now open.

In the fourth example, the outer periphery of the end (the left end portion in Figure 12, that is, the second sealing portion), facing the second valve port A, of the valve core 40 is tapered, that is, having a tapered surface that cooperates with the second valve port A, in order to better block the second valve port A and have a guiding effect. In order to facilitate abutting against the memory spring 201, the left end portion of the valve core 40 is also provided with a peripheral protrusion as shown in Figure 12, the right end of the memory spring 201 abuts against the peripheral protrusion. The end (the right end portion in Figure 12, that is, the first sealing portion), facing the first valve port B, of the valve core 40 has a protruding platform and the protruding platform can be inserted into the return spring 202. The return spring 202 is placed in the small hole 10c.

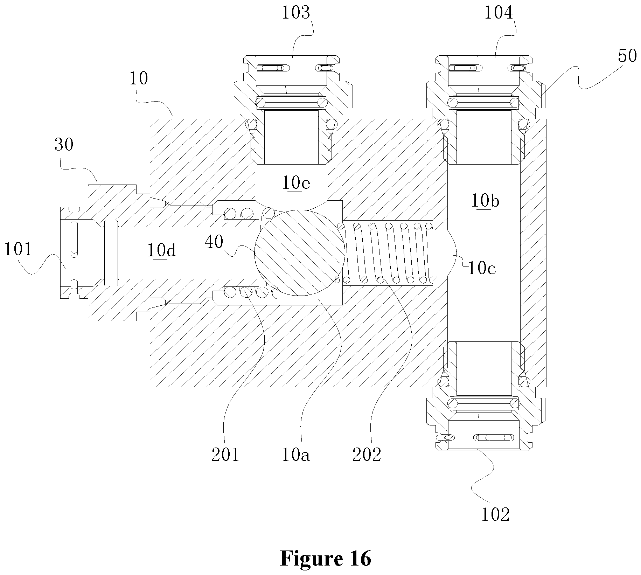

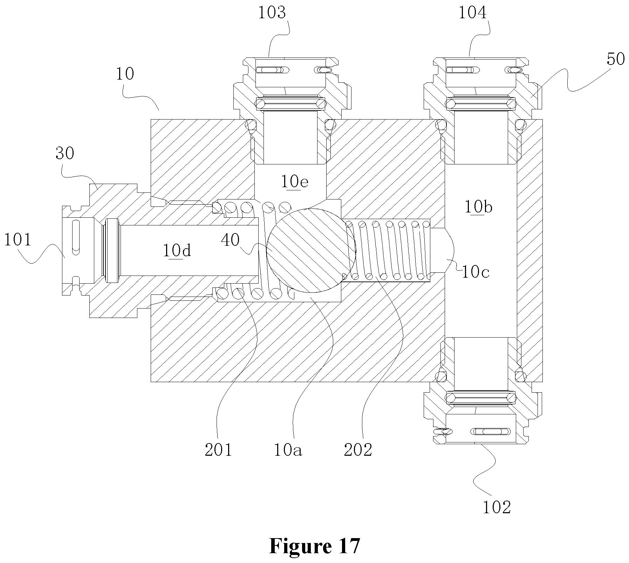

The valve core 40 may also have other structures, as shown in Figures 16 to 17. Figure 16 is a sectional view showing the structure of a thermostatic valve in an initial state according to a fifth example of the present application, with a first valve port B having a preset opening degree and a second valve port A having a preset opening degree; and Figure 17 is a schematic view of the thermostatic valve in Figure 16 after the temperature rises to a specified value and the memory spring 201 is deformed, with the first valve port B closed and the second valve port A opened.

This example is basically same as the fourth example, and the difference lies only in the structure of the valve core 40. In this example, the valve core 40 is a spherical body. When the spherical valve core 40 is used to block the first valve port B and the second valve port A, a better blocking effect can be realized. In other examples, the spherical valve core 40 may also be used, or at least the portion for blocking is processed into a spherical surface.

In the fifth example, a two-stage step is also provided on the end cover 30 with the seat switching structure, so that the memory spring 201 has an initial shape and forms an initial preset opening degree, which facilitates to filling the cooling oil into the cooler.

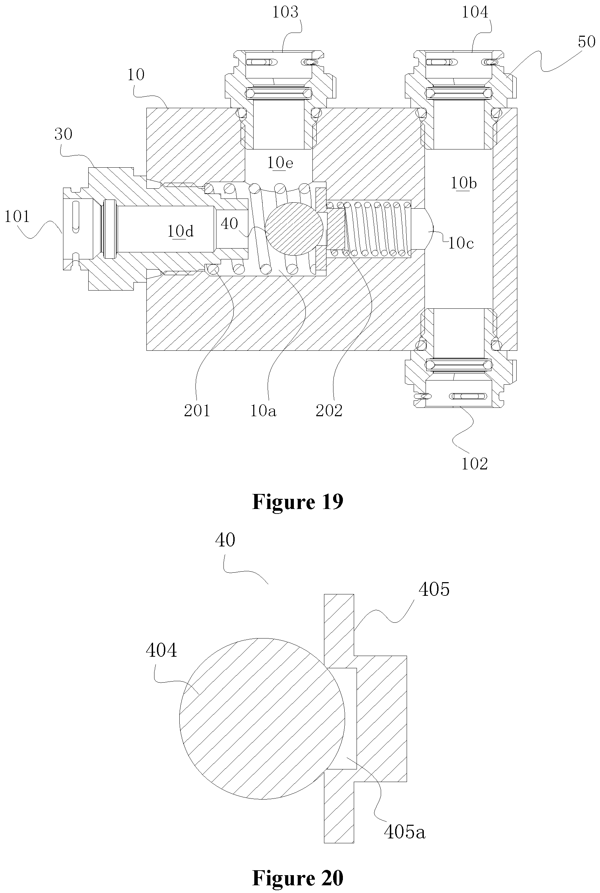

Regarding the structure of the valve core 40, reference can be further made to Figure 19, which is a sectional view showing the structure of a thermostatic valve according to a sixth example of the present application, with a first valve port B closed and a second valve port A opened; and Figure 20 is a schematic view showing the structure of the valve core 40 in Figure 19.

This example is the same as the fourth and fifth examples, except that the structure of the valve core 40 includes a spherical portion 404 and a sealing plate 405 connected to each other. The spherical portion 404 is used to block the second valve port A, and the sealing plate 405 is used to block the first valve port B. A recessed hole 405a is provided in the side of the sealing plate 405 facing the spherical portion 404, so that the spherical portion 404 can be partially inserted into the recessed hole 405a to be fixed, thereby facilitating the fixation of the spherical portion 404 and the sealing plate 405. A protrusion is provided on another side of the sealing plate 405, to be inserted into the return spring 202, which plays a role of positioning, guiding, and facilitating the installation of the return spring 202. At this time, the spherical portion 404 is not required to satisfy the blocking of the two valve ports at the same time, and the memory spring 201 is located between the end cover 30 and the sealing plate 405.

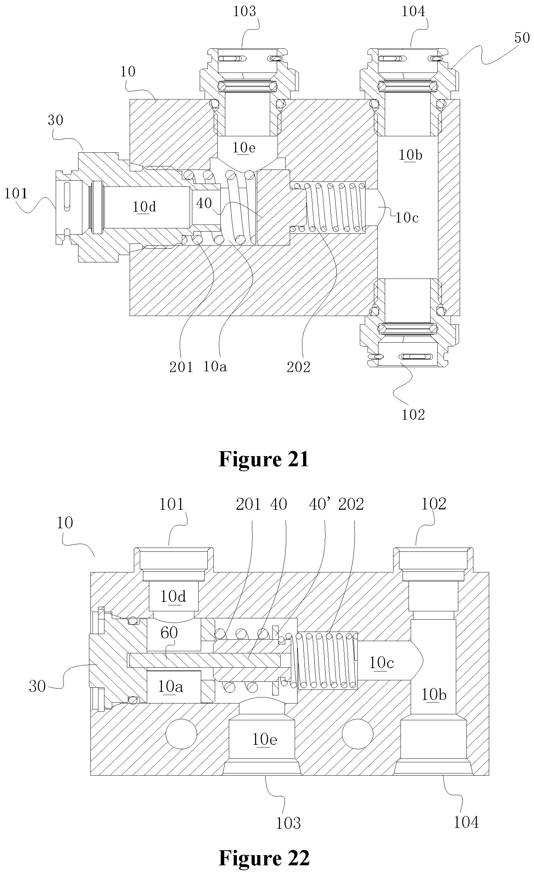

Referring to Figure 21 again, Figure 21 is a sectional view showing the structure of a thermostatic valve according to a seventh example of the present application, with a first valve port B closed and a second valve port A opened.

Compared to the fourth to sixth examples, the difference in this example lies only in the structure of the valve element 40. The valve core 40 is cylindrical in this example, and two end surfaces of the valve core 40 are used to seal the first valve port B and the second valve port A, respectively. A protrusion is also provided on the side of the valve core 40 facing the first valve port B, to be inserted into the return spring 202, which has functions of positioning, guiding and facilitating the installation of the return spring 202.

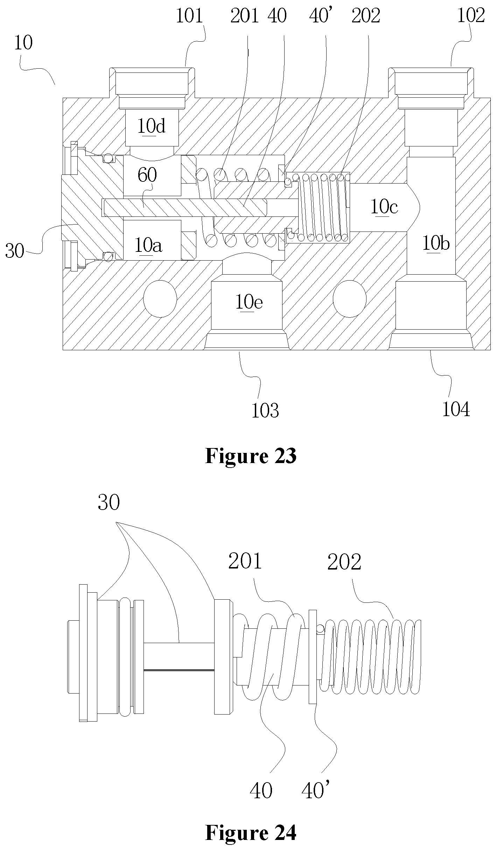

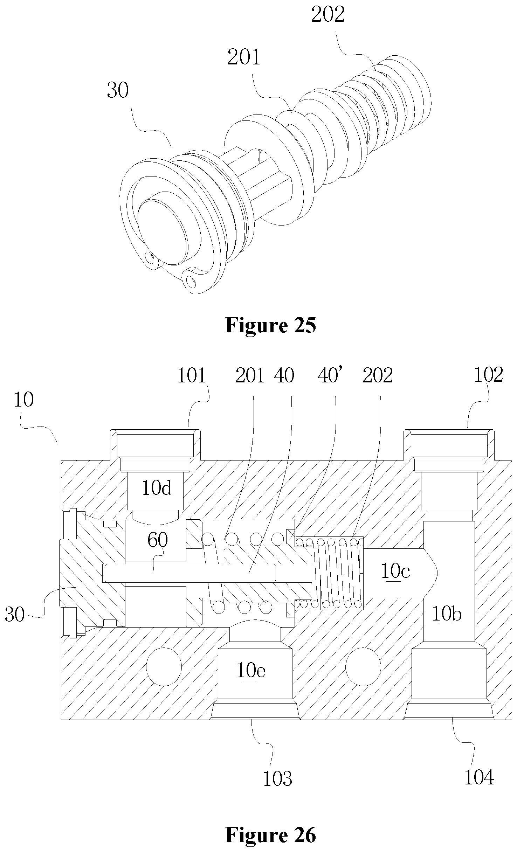

Referring to Figures 22 to 25 continuously, Figure 22 is a sectional view showing the structure of a thermostatic valve according to an eighth example of the present application, with a first valve port B opened and a second valve port A closed; Figure 23 is a schematic view of the thermostatic valve after the temperature rises and the memory spring 201 is deformed in Figure 22, with the first valve port B closed and the second valve port A opened; Figure 24 is a schematic view of the end cover 30 and the valve core 40, the return spring 202, and the memory spring 201 in Figure 22 after installation; and Figure 25 is a schematic perspective view of Figure 24.

Compared to the fourth to seventh examples, the second valve port A in this example is also provided in the end cover 30 (the end cover is not embodied as the seat switching structure), but the first outlet 101 is still provided in the side wall of the valve body 10. At this time, an outlet passage 10d communicating the first outlet 101 with the second valve port A is provided in the end cover 30 and the valve body 10, and the outlet passage 10d is actually equivalent to an "L" shape, as shown in Figure 22. The position of the second valve port A is similar to that of the fourth to seventh examples, which allows the valve core 40 to more conveniently move to realize blocking.

In addition, in this example, the end cover 30 is provided with a hole, and the thermostatic valve is further provided with a valve stem 60. One end of the valve stem 60 can be inserted into the hole along the axial direction to be fixed, and another end of the valve stem 60 extends out of the end cover 30. The other end of the valve stem 60 extending out of the end cover 30 can be inserted into the valve core 40 and is in sliding fit with the valve core 40. In this way, the valve core 40 can move along the valve stem 60 during the movement process, thereby having good positioning and guiding effects.

As shown in Figures 24 and 25, an annular passage is formed at the outer periphery of the end cover 30, which facilitates the medium flowing to the first outlet 101. In Figure 24, the left end portion of the end cover 30 is used to block the left end port of the valve cavity 10a, the second valve port A is formed at the right end portion, and a connector is provided between the left end portion and the right end portion. The valve stem 60 is inserted into the connector from the second valve port A and enters the left end portion. The left end portion, the right end portion, and the connector of the end cover 30 are integrally formed, so that the structure is reliable, achieving the reliable installation of the valve stem 60 and the memory spring 201, and these members can be assembled first and then installed into the valve cover 10a. Of course, the left end portion, the right end portion, and the connector of the end cover 30 may also be formed separately and then connected.

Obviously, the valve stem 60 is also applicable to other embodiments and examples. For the example where the first outlet 101 is provided in the end cover 30 with the seat switching structure, as shown in Figure 19, the valve stem can be inserted into the passage of the end cover 30, and the end portion of the valve stem can be fixed to the side wall of the passage by a connector.

It should be noted that, in the eighth example, the valve stem 60 is fixed to the end cover 30. It can be understood that the valve stem 60 can also be fixed to the valve core 40 and in sliding fit with the end cover 30. In comparison, in case that the valve stem 60 is fixed to the end cover 30, the valve core 40 can operate more smoothly and reliably.

Herein, the valve core 40 may be provided with a through hole to facilitate sliding along the valve stem 60. In addition, a sealing piece 40' is provided on the outer peripheral wall of the right end of the valve core 40. The sealing piece 40' serves as a first sealing portion for blocking the first valve port B. In order to install the return spring 202, an annular groove is further provided in the outer peripheral wall of the right end of the valve core 40. One end of the return spring 202 is inserted in the annular groove, another end of the return spring 202 abuts against the step of the small hole 10c, of course, the another end of the return spring 202 can also abut against the inner wall of the linear passage 10b or the end cavity wall of the valve cavity 10a, which has been described in the above examples, and will not be repeated here.

Regarding the sealing piece 40', the sealing piece 40' can also be integrally formed with the valve core 40. As shown in Figure 26, Figure 26 is a sectional view showing the structure of a thermostatic valve according to a ninth example of the present application, with a first valve port B closed and a second valve port A opened. When the sealing piece 40' is integrally formed with the valve core 40, it has a more reliable strength. The return spring 202 can directly abut against the sealing piece 40'. The return spring 202 shown in Figure 25 is pre-compressed on the step of the small hole 10c and the sealing piece 40'. The valve core 40 can be variously designed in each embodiment of the present application, and the structure of the valve core 40 in each embodiment can be used interchangeably.

It should be noted that, for each embodiment, when the first inlet 103 is provided in the side wall of the valve body 10, in order to improve the reliability of the movement of the valve core 40, the valve core 40 may be designed such that at least a portion of the valve core 40 is in sliding fit with the inner wall of the valve cavity 40, which can prevent impact on the valve core 40 or the memory spring 201 when the fluid flows in.

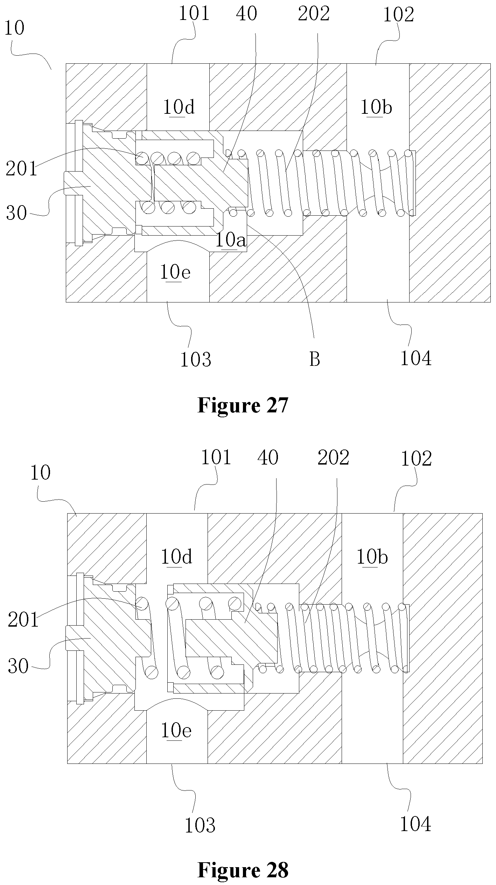

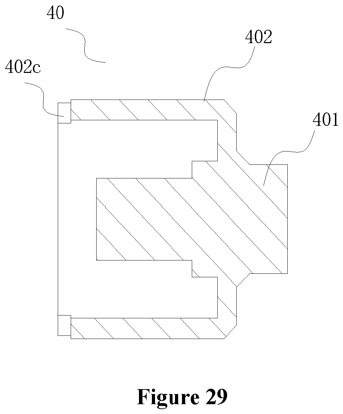

Referring to Figures 27 to 29, Figure 27 is a sectional view showing the structure of a thermostatic valve according to a tenth example of the present application, with a first valve port B opened and a second valve port A closed; Figure 28 is a schematic view of the thermostatic valve in Figure 27 after the valve core is moved to the right, with the second valve port A opened and the first valve port B closed; and Figure 29 is a schematic view of the valve core 40 in Figure 27.

In this example, the valve core 40 is movable axially along the valve cavity 10a, and a portion of the valve core 40 is in sliding fit with the inner wall of the valve cavity 10a. The first valve port B is located at the end cavity wall of the valve cavity 10a, that is, the axial cavity wall, and the second valve port A is located at the side cavity wall of the valve cavity 10a, that is, the radial cavity wall. In this solution, the first inlet 103 and the second valve port A are opposite to each other. Specifically, the inlet passage 10e communicating the first inlet 103 with the valve cavity 10a is opposite to the second valve port A and the outlet passage 10d. In this way, the passage between the first inlet 103 and the first outlet 101 is the linear passage. As shown in Figure 28, when the second valve port A is opened, the medium can flow out through the linear passage, and the response is faster.

The structure of the valve core 40 in this example is similar to that in the third example. The valve core 40 includes a sleeve portion 402 acting as a second sealing portion for blocking the second valve port A. The memory spring 201 is provided in the sleeve portion 402 and is located between the valve core 40 and the end cover 30. Of course, it is also feasible to block the second valve port A by using the valve core 40 with other structures or the memory spring 201.

In addition, in the tenth example, a notch 402c is provided at an edge of the open end of the sleeve portion 402, to function as a flow guiding passage for guiding a medium into the sleeve portion 402. As shown in Figure 27, when the sleeve portion 402 is used to block the second valve port A, the medium can enter the sleeve portion 402 through the position of the notch 402c, so that the memory spring 201 can be in contact with the heated medium and deform in time. It can be understood that the flow guiding passage is not limited to the notch 402c shown in the figure, for example, it may also be provided in the side wall or the bottom of the sleeve portion 402.

It should be noted that the outlet passage 10d and the inlet passage 10e in this embodiment are oppositely arranged. When the sleeve portion 402 is in sliding fit with the inner wall of the valve cavity 10a, in order to avoid blocking the passage between the medium and the first valve port B, in Figure 27, a part of the outer wall of the sleeve portion 402 corresponding to the second valve port A is in sliding fit with the inner wall of the valve cavity 10a, and a gap is provided between the part, corresponding to the inlet passage 10e and the first inlet 103, of the outer wall of the sleeve portion 402 and the inner wall of the valve cavity 10a, which can ensure that the medium can flow to the first valve port B. That is, the second sealing portion is only required to seal the second valve port A, and a gap is required to be provided between the portion, facing the inlet passage 10e, of the sleeve portion 402 and the inner wall of the valve cavity 10a. As shown in Figure 27, the central axis of the valve cavity 10a is offset from the central axis of the valve core 40, and the portion, opposite to the inlet passage 10e, of the valve cavity 10a is concave. Of course, it can be understood that the valve cavity 10a may not be concave, and the valve core 40 may be provided as an eccentric structure relative to the axis. This manner of a portion of the valve core 40 in sliding fit with the inner wall of the valve cavity 10a not only satisfies stability and impact resistance, but also facilitates fluid flow

In addition, in this example, a two-stage stepped hole is formed in the valve body 10 of the thermostatic valve, the largest hole is the valve cavity 10a, and a first valve port B is formed at a junction between the middle hole and the largest hole. In this way, the stroke of the valve core 40 moving to block the first valve port B can be shortened. Of course, it is also applicable to provide a stepped hole including a large hole and a small hole as in the above example.

The second inlet 102 and the second outlet 104 in this example are also opposite to each other, and a linear passage 10b is formed between the second inlet 102 and the second outlet 104, and the return spring 202 penetrates the smallest hole and is compressed between the valve core 40 and the inner wall of the linear passage 10b. A groove allowing the end portion of the return spring 202 to be inserted can be provided in the inner wall of the linear passage 10b. Obviously, the end portion of the return spring 202 may also be compressed on the end wall of the valve cavity 10a, or a step may be provided at the smallest hole, and the end portion of the return spring 202 can be compressed on the step or the valve core 40.

It should be noted that, in the above example, the formed valve cavity 10a is a cavity with an end port at one end, an end cover 30 is provided at the end port, and the memory spring 201 is provided between the end cover 30 and the valve core 40. This method is convenient for machining the valve body 10 to form the valve cavity 10a, but it can be understood that the structure of the valve cavity 10a is not limited thereto. For example, when using a casting process, two ends of the valve cavity 10a may not have end ports, and no end covers are provided. Then, the memory spring 201 and the return spring 202 (in the first embodiment) may be provided between the cavity wall of the valve cavity 10a and the valve core 40.

It can be seen from the example with the preset opening degree that the purpose of setting the two-stage step is to use the characteristic of the memory spring 201, to allow the memory spring 201 to switch from the initial position to the working position after being heated, expanded and deformed, and to be kept at the working position. Therefore, the solutions for realizing the purpose is not limited to providing the two-stage step. For example, an annular groove is provided at the end portion of the valve core 40, and an end portion of the memory spring 201 is provided in the annular groove, and after the temperature rises, this end portion of the memory spring 201 is detached from the annular groove and abuts against other position as the working position, which can also achieve the purpose of setting the initial preset opening degree.

In the above example, the control element for controlling the movement of the valve core 40 of the thermostatic valve is the memory spring 201. Compared with the solution that the spring is surrounded around the thermal actuator, the response time of the memory spring 201 is faster, and the second valve port A can be opened in time to switch the medium to another flow path. When being applied to the cooler and the transmission, it can improve the performance of the transmission and prevent damages to the transmission.

Further, in this case, a thermal actuator is not required to be additionally provided in the thermostatic valve, the structure is simple and the installation is convenient, which allows the whole thermostatic valve lighter in weight and smaller in volume.

It should be noted that in the above embodiments and examples, as an example, the valve body 10 is provided with the first valve port B and the second valve port A. It can be understood that the second valve port A may not be provided, that is the second valve port A that can be opened and closed is not provided, but the passage between the first outlet 101 and the valve cavity 10a is through. Taking the application to the transmission and the cooler as an example, when the first valve port B is closed, the medium (such as lubricating oil) can directly flow to the cooler; when the first valve port B is opened, even if there is no second valve port A and only the outlet passage in communication with the first outlet 101 is provided, because the cooler is in communication with the first outlet 101, the flow resistance of the flow path through the first outlet 101 will be greater than the flow resistance of the flow path directly flowing to the second outlet 104 through the first valve port B. Therefore, the medium will mostly flow through the first valve port B to the second outlet 104. Of course, by providing the second valve port A and switching the opening and closing states of the second valve port A and the first valve port B, it can more clearly distribute the flow paths of the medium under different requirements and reduce the system internal leakage.

In addition, when the second valve port A is not provided, in the above embodiment with the initial position and working position, it can be designed in a way that when the memory spring 201 is at the initial position, the first valve port B is closed, so that the lubricating oil can be directly flows into the cooler from the first outlet 101 to fill the lubricating oil in the initial state. At the same time, a second inlet 102 should be provided, and the first valve port B will also be in communication with the second inlet 102, so that the lubricating oil flowing in from the second inlet 102 can also fill the passage between the first valve port B and the transmission, to complete the oil filling process of the whole system.

When the second valve port A is provided, the first valve port B may have a preset opening degree as described in the above embodiment, and may also be closed. When the first valve port B is closed, the valve body 10 of the thermostatic valve is also preferably provided with the second inlet 102 in communication with the second outlet 104, so that the lubricating oil flowing in from the second inlet 102 can also fill the passage between the first valve port B and the transmission. Of course, when the first valve port B has a preset opening degree at the initial position, the passage between the first valve port B and the transmission can be filled. The solution is not limited to providing the second inlet 102 in the valve body 10, and the outlet of the cooler can also be connected to the transmission through other passages.

Regardless of whether or not the second valve port A is provided, in order to facilitate filling the cooler in the initial state, it can be set as follows: a distance between the valve core 40 and the first valve port B when the memory spring 201 is at the initial position is smaller than the distance between the valve core 40 and the first valve port B when the memory spring is at the working position and the temperature is below a specified value. In this way, when the memory spring 201 is below the temperature with the specified value, the length of the memory spring 201 changes, so that the first valve port B and/or the second valve port A can be adjusted to have different opening degrees at the initial position and working position.

The above embodiments are only preferred embodiments of the present application, and some examples not according to the claims are described.

## Claims

1. A thermostatic valve comprising an end cover (30), a valve body (10), and a valve core (40) located in a valve cavity (10a) of the valve body (10), wherein the thermostatic valve has a first outlet (101), a second outlet (104), and a first inlet (103) which is in communication with the valve cavity (10a), the valve body (10) is further provided with a first valve port (B) configured to communicate the valve cavity (10a) with the second outlet (104), and during a movement of the valve core (40), the valve core (40) is configured to open or close the first valve port (B); wherein
a return spring (202) and a memory spring (201) are further provided in the valve cavity (10a), the memory spring (201) is made of a memory alloy; the return spring (202) is configured to provide a return force to allow the valve core (40) to open the first valve port (B); the memory spring (201) has one end in contact with one end of the valve core (40), and another end in contact with the end cover (30), and when a temperature rises to a specified value, the memory spring (201) is configured to generate an elastic force to drive the valve core (40) to move against the return force to close the first valve port (B); and
the first inlet (103) is provided in a side wall of the valve body (10),
the thermostatic valve being **characterized in that** it is further provided with a second valve port (A), the second valve port (A) is provided in a side cavity wall of the valve cavity (10a), and when the temperature is less than the specified value, the memory spring (201) is in a compressed and tight state and in correspondence to the position of the second valve port (A), to block the second valve port (A), wherein the second valve port (A) is for communicating the valve cavity (10a) with the first outlet (101).

2. The thermostatic valve according to claim 1, wherein the valve core (40) or the end cover (30) is provided with an initial position and a working position, and at least one end of the memory spring (201) is located at the initial position of the end cover (30) or the initial position of the valve core (40), and when the memory spring (201) is at the initial position, the first valve port (B) is in a closed state, the second valve port (A) is in an open state, and the second valve port (A) has a preset opening degree; after the temperature of the memory spring (201) is heated to the specified value and the memory spring (201) is deformed, an end portion of the memory spring is configured to be detached from the initial position to be at the working position and maintained at the working position; and
at the working position, when the temperature rises to the specified value, the memory spring (201) is configured to generate the elastic force to drive the valve core (40) to move against the return force to close the first valve port (B); and after the temperature of the memory spring (201) is reduced below the specified value, the memory spring (201) loses elastic characteristic, and the return spring (202) is configured to drive the valve core (40) to open the first valve port (B).

3. The thermostatic valve according to claim 2, wherein the end cover (30) is provided with a two-stage step, comprising a first step and a second step having an outer diameter greater than an outer diameter of the first step, a position of a first step surface is the initial position, a position of a second step surface is the working position, and a distance between the initial position and the first valve port (B) is smaller than the distance between the working position and the first valve port (B).

4. The thermostatic valve according to claim 2 or 3, wherein the thermostatic valve further comprises a second inlet (102) in communication with the second outlet (104), and the first outlet (101), the second inlet (102), the second outlet (104), and the first inlet (103) are all provided in the side wall of the valve body (10); and the second outlet (104) and the second inlet (102) are opposite to each other, a linear passage (10b) is formed between the second outlet (104) and the second inlet (102), and the first valve port (B) is in communication with the linear passage (10b).

5. The thermostatic valve according to claim 2 or 3, wherein the thermostatic valve further comprises a second inlet (102) in communication with the second outlet (104), and the first outlet (101) and the second inlet (102) are respectively connected to an inlet and an outlet of a cooler; and the first inlet (103) and the second outlet (104) are respectively connected to an inlet and an outlet of a transmission.

6. The thermostatic valve according to claim 4 or 5, wherein a stepped hole is formed in the valve body (10), a large hole of the stepped hole is the valve cavity (10a), and the first valve port (B) is formed at a junction of the large hole and a small hole (10c) of the stepped hole; a guide rod (403) is connected to the first sealing portion, the guide rod (403) is inserted into the small hole (10c) and in sliding fit with an inner wall of the small hole (10c) to guide the movement of the valve core (40).

7. The thermostatic valve according to claim 1, wherein the thermostatic valve has a second inlet (102) in communication with the second outlet (104),
wherein, at least one of the valve body (10), the valve core (40) and the end cover (30) is provided with an initial position and a working position, and at least one end portion of the memory spring (201) is located at the initial position of the valve body (10) or the valve core (40) or the end cover (30); and after a temperature of the memory spring (201) is heated to a specified value and the memory spring (201) is deformed, the end portion of the memory spring (201) is configured to be detached from the initial position and to be maintained at the working position;
when the memory spring (201) is at the initial position, the first valve port (B) is closed; and a distance between the valve core (40) and the first valve port (B) when the memory spring (201) is at the initial position is smaller than a distance between the valve core (40) and the first valve port (B) when the memory spring (201) is at the working position and the temperature is below a specified value; and
when the memory spring (201) is at the working position and the temperature rises to the specified value, the memory spring (201) is configured to generate the elastic force to drive the valve core (40) to move against the return force to close the first valve port (B); and after the temperature of the memory spring (201) is reduced below the specified value, the memory spring (201) loses elastic characteristic, and the return spring (202) is configured to drive the valve core (40) to open the first valve port (B).

## Patentansprüche

1. Thermostatventil umfassend eine Endabdeckung (30), einen Ventilkörper (10) und einen Ventilkern (40), der sich in einem Ventilhohlraum (10a) des Ventilkörpers (10) befindet, wobei das Thermostatventil einen ersten Auslass (101), einen zweiten Auslass (104) und einen ersten Einlass (103) aufweist, der mit dem Ventilhohlraum (10a) in Verbindung steht, der Ventilkörper (10) ferner mit einer ersten Ventilöffnung (B) versehen ist, die dazu ausgebildet ist, den Ventilhohlraum (1 0a) mit dem zweiten Auslass (104) in Verbindung zu bringen, und der Ventilkern (40) dazu ausgebildet ist, während einer Bewegung des Ventilkerns (40), die erste Ventilöffnung (B) zu öffnen oder zu schließen; wobei
eine Rückstellfeder (202) und eine Memoryfeder (201) ferner in dem Ventilhohlraum (10a) vorgesehen sind, wobei die Memoryfeder (201) aus einer Memory-Legierung besteht; wobei die Rückstellfeder (202) dazu ausgebildet ist, eine Rückstellkraft bereitzustellen, damit der Ventilkern (40) die erste Ventilöffnung (B) öffnen kann; wobei die Memoryfeder (201) mit einem Ende mit einem Ende des Ventilkerns (40) in Kontakt steht und mit einem anderen Ende mit der Endabdeckung (30) in Kontakt steht, und wenn eine Temperatur auf einen vorgegebenen Wert ansteigt, die Memoryfeder (201) dazu ausgebildet ist, eine elastische Kraft zu erzeugen, um den Ventilkern (40) gegen die Rückstellkraft zu bewegen, um die erste Ventilöffnung (B) zu schließen; und
der erste Einlass (103) in einer Seitenwand des Ventilkörpers (10) vorgesehen ist, wobei das Thermostatventil **dadurch gekennzeichnet ist, dass** es ferner mit einer zweiten Ventilöffnung (A) versehen ist, die zweite Ventilöffnung (A) in einer Seitenwand des Ventilhohlraums (10a) vorgesehen ist und, wenn die Temperatur niedriger ist als der vorgegebene Wert, die Memoryfeder (201) sich in einem komprimierten und gespannten Zustand und in Übereinstimmung mit der Position der zweiten Ventilöffnung (A) befindet, um die zweite Ventilöffnung (A) zu blockieren, wobei die zweite Ventilöffnung (A) dazu dient, den Ventilhohlraum (10a) mit dem ersten Auslass (101) in Verbindung zu bringen.

2. Thermostatventil nach Anspruch 1, wobei der Ventilkern (40) oder die Endabdeckung (30) mit einer Anfangsposition und einer Arbeitsposition versehen ist, und wenigstens ein Ende der Memoryfeder (201) sich in der Anfangsposition der Endabdeckung (30) oder der Anfangsposition des Ventilkerns (40) befindet, und wenn sich die Memoryfeder (201) in der Anfangsposition befindet, sich die erste Ventilöffnung (B) in einem geschlossenen Zustand befindet, die zweite Ventilöffnung (A) sich in einem geöffneten Zustand befindet, und die zweite Ventilöffnung (A) einen voreingestellten Öffnungsgrad aufweist; nachdem die Temperatur der Memoryfeder (201) auf den vorgegebenen Wert gestiegen ist und die Memoryfeder (201) verformt ist, ein Endabschnitt der Memoryfeder dazu ausgebildet ist, sich von der Anfangsposition zu lösen, um die Arbeitsposition einzunehmen und in der Arbeitsposition gehalten zu werden; und
wenn die Temperatur in der Arbeitsposition auf den vorgegebenen Wert ansteigt, die Memoryfeder (201) dazu ausgebildet ist, die elastische Kraft zu erzeugen, um den Ventilkern (40) gegen die Rückstellkraft zu bewegen, um die erste Ventilöffnung (B) zu schließen; und nachdem die Temperatur der Memoryfeder (201) unter den vorgegebenen Wert gefallen ist, die Memoryfeder (201) ihre elastischen Eigenschaften verliert, und die Rückstellfeder (202) dazu ausgebildet ist, den Ventilkern (40) anzutreiben, um die erste Ventilöffnung (B) zu öffnen.

3. Thermostatventil nach Anspruch 2, wobei die Endabdeckung (30) mit einer zweistufigen Stufe versehen ist, umfassend eine erste Stufe und eine zweite Stufe mit einem Außendurchmesser größer als ein Außendurchmesser der ersten Stufe, wobei eine Position einer Oberfläche der ersten Stufe die Anfangsposition ist, eine Position einer Oberfläche der zweiten Stufe die Arbeitsposition ist und ein Abstand zwischen der Anfangsposition und der ersten Ventilöffnung (B) kleiner ist als ein Abstand zwischen der Arbeitsposition und der ersten Ventilöffnung (B).

4. Thermostatventil nach Anspruch 2 oder 3, wobei das Thermostatventil ferner einen zweiten Einlass (102) umfasst, der mit dem zweiten Auslass (104) in Verbindung steht, und der erste Auslass (101), der zweite Einlass (102), der zweite Auslass (104) und der erste Einlass (103) alle in der Seitenwand des Ventilkörpers (10) vorgesehen sind; und der zweite Auslass (104) und der zweite Einlass (102) einander gegenüberliegen, ein linearer Durchgang (10b) zwischen dem zweiten Auslass (104) und dem zweiten Einlass (102) gebildet ist, und die erste Ventilöffnung (B) mit dem linearen Durchgang (10b) in Verbindung steht.

5. Thermostatventil nach Anspruch 2 oder 3, wobei das Thermostatventil ferner einen zweiten Einlass (102) umfasst, der mit dem zweiten Auslass (104) in Verbindung steht, und der erste Auslass (101) und der zweite Einlass (102) jeweils mit einem Einlass und einem Auslass eines Kühlers verbunden sind; und der erste Einlass (103) und der zweite Auslass (104) jeweils mit einem Einlass und einem Auslass eines Getriebes verbunden sind.

6. Thermostatventil nach Anspruch 4 oder 5, wobei eine Stufenbohrung in dem Ventilkörper (10) ausgebildet ist, ein großes Loch der Stufenbohrung den Ventilhohlraum (10a) darstellt, und die erste Ventilöffnung (B) an einem Übergang zwischen dem großen Loch und einem kleinen Loch (10c) der Stufenbohrung ausgebildet ist; eine Führungsstange (403) mit dem ersten Dichtungsabschnitt verbunden ist, wobei die Führungsstange in das kleine Loch (10c) eingesetzt ist und mit einer Innenwand des kleinen Loches (10c) in Gleitsitz steht, um die Bewegung des Ventilkerns (40) zu führen.

7. Thermostatventil nach Anspruch 1, wobei das Thermostatventil einen zweiten Einlass (102) aufweist, der mit dem zweiten Auslass (104) in Verbindung steht,
wobei wenigstens eines von dem Ventilkörper (10), dem Ventilkern (40) und der Endabdeckung (30) mit einer Anfangsposition und einer Arbeitsposition versehen ist, und wenigstens ein Endabschnitt der Memoryfeder (201) sich in der Anfangsposition des Ventilkörpers (10) oder des Ventilkerns (40) oder der Endabdeckung (30) befindet; und nachdem eine Temperatur der Memoryfeder (201) auf einen vorgegebenen Wert gestiegen ist und die Memoryfeder (201) verformt ist, der Endabschnitt der Memoryfeder (201) dazu ausgebildet ist, sich aus der Anfangsposition zu lösen und in der Arbeitsposition gehalten zu werden;
wenn sich die Memoryfeder (201) in der Anfangsposition befindet, die erste Ventilöffnung (B) geschlossen ist; und wenn sich die Memoryfeder (201) in der Anfangsposition befindet, ein Abstand zwischen dem Ventilkern (40) und der ersten Ventilöffnung (B) kleiner als ein Abstand zwischen dem Ventilkern (40) und der ersten Ventilöffnung (B) ist, wenn sich die Memoryfeder (201) in der Arbeitsposition befindet und die Temperatur unter einem vorgegebenen Wert liegt; und
wenn sich die Memoryfeder (201) in der Arbeitsposition befindet und die Temperatur auf den vorgegebenen Wert ansteigt, die Memoryfeder (201) dazu ausgebildet ist, die elastische Kraft zu erzeugen, um den Ventilkern (40) gegen die Rückstellkraft in zu bewegen, um die erste Ventilöffnung (B) zu schließen; und nachdem die Temperatur der Memoryfeder (201) unter den vorgegebenen Wert gefallen ist, die Memoryfeder (201) ihre elastischen Eigenschaften verliert, und die Rückstellfeder (202) dazu ausgebildet ist, den Ventilkern (40) anzutreiben, um die erste Ventilöffnung (B) zu öffnen.

## Revendications

1. Vanne thermostatique comprenant un couvercle d'extrémité (30), un corps de vanne (10), et un noyau de vanne (40) situé dans une cavité de vanne (10a) du corps de vanne (10), dans laquelle la vanne thermostatique présente une première sortie (101), une deuxième sortie (104), et une première entrée (103) qui est en communication avec la cavité de vanne (10a), le corps de vanne (10) est en outre pourvu d'un premier orifice de vanne (B) configuré pour faire communiquer la cavité de vanne (10a) avec la deuxième sortie (104), et pendant un mouvement du noyau de vanne (40), le noyau de vanne (40) est configuré pour ouvrir ou fermer le premier orifice de vanne (B) ; dans lequel
un ressort de rappel (202) et un ressort à mémoire (201) sont en outre prévus dans la cavité de vanne (10a), le ressort à mémoire (201) est constitué d'un alliage à mémoire ; le ressort de rappel (202) est configuré pour fournir une force de rappel afin de permettre au noyau de vanne (40) d'ouvrir le premier orifice de vanne (B) ; le ressort à mémoire (201) présente une extrémité en contact avec une extrémité du noyau de vanne (40), et une autre extrémité en contact avec le couvercle d'extrémité (30), et lorsqu'une température monte jusqu'à une valeur spécifiée, le ressort à mémoire (201) est configuré pour générer une force élastique afin d'entraîner le noyau de vanne (40) à se déplacer contre la force de rappel pour fermer le premier orifice de vanne (B) ; et
la première entrée (103) est prévue dans une paroi latérale du corps de vanne (10), la vanne thermostatique étant **caractérisée en ce qu'**elle est en outre pourvue d'un deuxième orifice de vanne (A), le deuxième orifice de vanne (A) est prévu dans une paroi latérale de la cavité de vanne (10a), et lorsque la température est inférieure à la valeur spécifiée, le ressort à mémoire (201) est dans un état comprimé et serré et en correspondance avec la position du deuxième orifice de vanne (A), afin de bloquer le deuxième orifice de vanne (A), le deuxième orifice de vanne (A) étant destiné à faire communiquer la cavité de vanne (1 0a) avec la première sortie (101).

2. Vanne thermostatique selon la revendication 1, dans laquelle le noyau de vanne (40) ou le couvercle d'extrémité (30) est pourvu d'une position initiale et d'une position de travail, et au moins une extrémité du ressort à mémoire (201) est située dans la position initiale du couvercle d'extrémité (30) ou la position initiale du noyau de vanne (40), et lorsque le ressort à mémoire (201) est dans la position initiale, le premier orifice de vanne (B) est dans un état fermé, le deuxième orifice de vanne (A) est dans un état ouvert, et le deuxième orifice de vanne (A) présente un degré d'ouverture préréglé ; après que la température du ressort à mémoire (201) est chauffée à la valeur spécifiée et le ressort à mémoire (201) est déformé, une partie d'extrémité du ressort à mémoire est configurée pour être détachée de la position initiale pour être dans la position de travail et maintenue dans la position de travail ; et
dans la position de travail, lorsque la température monte à la valeur spécifiée, le ressort à mémoire (201) est configuré pour générer la force élastique afin d'entraîner le noyau de vanne (40) à se déplacer contre la force de rappel pour fermer le premier orifice de vanne (B) ; et après que la température du ressort à mémoire (201) est réduite en dessous de la valeur spécifiée, le ressort à mémoire (201) perd sa caractéristique élastique, et le ressort de rappel (202) est configuré pour entraîner le noyau de vanne (40) pour ouvrir le premier orifice de vanne (B).

3. Vanne thermostatique selon la revendication 2, dans laquelle le couvercle d'extrémité (30) est pourvu d'une marche à deux étages, comprenant une première marche et une deuxième marche ayant un diamètre extérieur supérieur à un diamètre extérieur de la première marche, une position d'une surface de la première marche est la position initiale, une position d'une surface de la deuxième marche est la position de travail, et une distance entre la position initiale et le premier orifice de vanne (B) est inférieure à la distance entre la position de travail et le premier orifice de vanne (B).

4. Vanne thermostatique selon la revendication 2 ou 3, dans laquelle la vanne thermostatique comprend en outre une deuxième entrée (102) en communication avec la deuxième sortie (104), et la première sortie (101), la deuxième entrée (102), la deuxième sortie (104), et la première entrée (103) sont toutes prévues dans la paroi latérale du corps de vanne (10) ; et la deuxième sortie (104) et la deuxième entrée (102) sont opposées l'une à l'autre, un passage linéaire (10b) est formé entre la deuxième sortie (104) et la deuxième entrée (102), et le premier orifice de vanne (B) est en communication avec le passage linéaire (10b).

5. Vanne thermostatique selon la revendication 2 ou 3, dans laquelle la vanne thermostatique comprend en outre une deuxième entrée (102) en communication avec la deuxième sortie (104), et la première sortie (101) et la deuxième entrée (102) sont respectivement reliées à une entrée et une sortie d'un refroidisseur ; et la première entrée (103) et la deuxième sortie (104) sont respectivement reliées à une entrée et une sortie d'une transmission.

6. Vanne thermostatique selon la revendication 4 ou 5, dans laquelle un trou étagé est formé dans le corps de vanne (10), un grand trou du trou étagé est la cavité de vanne (1 0a), et le premier orifice de vanne (B) est formé à une jonction du grand trou et d'un petit trou (10c) du trou étagé ; une tige de guidage (403) est reliée à la première partie d'étanchéité, la tige de guidage (403) est insérée dans le petit trou (10c) et en ajustement glissant avec une paroi intérieure du petit trou (10c) pour guider le mouvement du noyau de vanne (40).

7. Vanne thermostatique selon la revendication 1, dans laquelle la vanne thermostatique présente une deuxième entrée (102) en communication avec la deuxième sortie (104),
dans lequel, au moins un du corps de vanne (10), du noyau de vanne (40) et du couvercle d'extrémité (30) est pourvu d'une position initiale et d'une position de travail, et au moins une partie d'extrémité du ressort à mémoire (201) est située dans la position initiale du corps de vanne (10) ou du noyau de vanne (40) ou du couvercle d'extrémité (30) ; et après qu'une température du ressort à mémoire (201) est chauffée à une valeur spécifiée et que le ressort à mémoire (201) est déformé, la partie d'extrémité du ressort à mémoire (201) est configurée pour être détachée de la position initiale et pour être maintenue dans la position de travail ;
lorsque le ressort à mémoire (201) est dans la position initiale, le premier orifice de vanne (B) est fermé ; et une distance entre le noyau de vanne (40) et le premier orifice de vanne (B) lorsque le ressort à mémoire (201) est dans position initiale est inférieure à une distance entre le noyau de vanne (40) et le premier orifice de vanne (B) lorsque le ressort à mémoire (201) est dans la position de travail et que la température est inférieure à une valeur spécifiée ; et
lorsque le ressort à mémoire (201) est dans la position de travail et la température monte à la valeur spécifiée, le ressort à mémoire (201) est configuré pour générer la force élastique afin d'entraîner le noyau de vanne (40) à se déplacer contre la force de rappel pour fermer le premier orifice de vanne (B) ; et après que la température du ressort à mémoire (201) est réduite en dessous de la valeur spécifiée, le ressort à mémoire (201) perd sa caractéristique élastique, et le ressort de rappel (202) est configuré pour entraîner le noyau de vanne (40) pour ouvrir le premier orifice de vanne (B).
